# FASCICULE DE BREVET EUROPEEN

(11) **EP 1 498 331 B1**
(45) Date de publication et mention de la délivrance du brevet: **03.01.2007**
(21) Numéro de dépôt: 04291791.4
(22) Date de dépôt: 13.07.2004
(51) Int. Cl.: B60S 1/52

(54) **Lave-projecteur télescopique pour véhicule automobile**
Teleskopische Scheinwerfer-Reinigungseinrichtung für ein Kraftfahrzeug
Telescopic headlamp washer for a vehicle

(30) Priorité: 17.07.2003 FR 0308759
(43) Date de publication de la demande: 19.01.2005
(73) Titulaire: VALEO VISION, 93012 Bobigny Cédex (FR)
(72) Inventeur: Voll, Marc, 4102 Ougree (BE); De Fruyt, Philippe, 1180 Bruxelles (BE)

(56) Documents cités:
- EP-A- 1 190 922
- DE-A- 10 104 989
- FR-A- 2 666 777
- FR-A- 2 671 773
- US-A- 5 269 464
- US-A1- 2002 063 168
- PATENT ABSTRACTS OF JAPAN vol. 012, no. 014 (M-659), 16 janvier 1988 (1988-01-16) -& JP 62 175242 A (MAZDA MOTOR CORP), 31 juillet 1987 (1987-07-31)

## Description

L'invention concerne un lave-projecteur télescopique pour véhicule automobile.

Des dispositifs de lavage associés aux projecteurs ou lave-projecteur escamotable pour véhicule automobile sont connus qui comportent un porte-gicleur associé à des moyens d'alimentation en liquide de lavage et relié à la tige d'un piston monté coulissant à l'intérieur d'un cylindre fixé à une partie de la structure d'un véhicule. La course du piston est généralement obtenue par la poussée du liquide de lavage entraînant la translation du porte-gicleur. Ce dernier peut comporter une soupape tarée pour laisser passer le flux de liquide vers le gicleur, lorsque le porte-gicleur est en position de lavage. Le porte-gicleur revient à sa position de repos sous l'action d'un ressort de rappel, lorsque la pression de liquide est relâchée.

Un tel lave-projecteur est décrit dans le document de brevet FR 2 666 777. Selon ce document, le cylindre est placé dans une position verticale à un niveau inférieur au projecteur. Le porte-gicleur est relié à la tige du piston de manière articulée autour d'un axe horizontal et comporte à son extrémité opposée au gicleur, par rapport à l'axe d'articulation, un organe de basculement destiné à venir en butée, lors du déplacement vertical et vers le haut de la tige du piston, contre une partie de la structure du véhicule. Ainsi le porte-gicleur passe d'une position de repos où il est horizontal, la soupape étant fermée et le gicleur dirigé hors la glace du projecteur, à une position active où il est pivoté vers le haut, sa soupape étant ouverte et le gicleur dirigé vers la glace du projecteur.

Un tel lave-projecteur pose les problèmes techniques suivants.

En cas de vitesse élevée du véhicule automobile, il se crée un fort flux d'air entre le gicleur et la glace du projecteur. Cet écoulement d'air a tendance à soulever le jet de liquide qui alors n'assure plus correctement sa fonction de lavage de la glace et peut même à l'extrême être totalement dévié de la glace.

Par ailleurs, même si l'encombrement de ce lave-projecteur connu est réduit par le fait qu'en position de repos le porte-gicleur est replié à 90° de la tige de piston, il n'empêche que le cylindre de piston étant positionné verticalement, il occupe une place relativement important en hauteur et surtout cet agencement exige un espace vertical de disposition du cylindre.

Il est par ailleurs connu du document DE101 04 989 un lave-projecteur téléscopique dont le porte-gicleur est apte à pivoter selon un certain angle par rapport au reste du corps du lave-projecteur.

L'invention résout ces problèmes en proposant un lave-projecteur qui puisse résoudre ce premier problème de déviation à grande vitesse et ce second problème d'encombrement, simultanément ou individuellement.

Pour ce faire, l'invention propose un lave-projecteur télescopique pour véhicule automobile selon la première revendication.

Selon un premier mode de réalisation, de preférence, ledit déplacement assure le pivotement du porte-gicleur vers sa position pivotée en position déployée.

Avantageusement, le porte-gicleur est relié à la tige du piston de manière articulée autour d'un axe transversal par l'intermédiaire d'une liaison dite de pivotement d'une position de repos à une position déployée pivotée et ladite liaison de pivotement est à déclenchement contrôlé. C'est bien le démarrage du pivotement que l'invention parvient, de préférence et avant tout, à contrôler.

De préférence, ladite liaison de pivotement est sollicitée par un agencement flexible taré.

Ledit agencement flexible peut être constitué d'au moins un ressort de compression ou d'au moins un ressort de traction.

Selon une caractéristique constitutive, ladite tige et ledit porte-gicleur sont reliés par un manchon cylindrique étanche.

Ledit manchon et ledit agencement flexible peuvent être constitués d'une même pièce, afin de limiter au mieux le nombre de pièces nécessaires pour réaliser le lave-projecteur selon l'invention il peut notamment s'agir d'un matériau plastique approprié.

Ladite tige et ledit porte-gicleur peuvent être reliés par une charnière.

L'invention concerne également un agencement de lavage de projecteur, un tel lave-projecteur étant solidarisé à une partie de la structure d'un véhicule, caractérisé en ce que ledit cylindre est monté incliné sur ladite partie de structure.

Ainsi, le lave-projecteur mis en fonctionnement se déploie de façon rectiligne, tige et porte-gicleur alignés, et reste dans cette position aux basses et moyennes vitesses du véhicule. Le gicleur dont l'ouverture est en général sensiblement perpendiculaire à l'axe longitudinal du lave-projecteur, est alors positionné pour que son jet de liquide de lavage atteigne correctement la glace du projecteur. Aux vitesses élevées supérieures à ladite valeur seuil, le lave-projecteur est déplacé en pivotement en direction de la glace ce qui redirige correctement son jet de liquide sur celle-ci.

L'invention concerne enfin un agencement de lavage de projecteur, un tel lave-projecteur étant solidarisé à une partie de la structure d'un véhicule, caractérisé en ce que ledit cylindre est monté sensiblement horizontalement sur ladite partie de structure.

Dans ce cas, le lave-projecteur est déplacé dès son déploiement en position pivotée de fonctionnement. Il est ainsi possible de le monter sensiblement horizontal sur la structure du véhicule, juste en dessous du bloc optique du projecteur. Lors de son déploiement, il est pivoté vers le haut pour diriger le gicleur vers la glace du projecteur.

Ladite partie de structure peut être un bouclier ou pare-chocs, ou le boîtier du projecteur.

L'invention est décrite ci-après plus en détail à l'aide de figures ne représentant que des modes de réalisation préférés.

Les figures 1A et 1B sont des vues schématiques d'un lave-projecteur selon un art antérieur.

La figure 1C est une vue schématique d'un lave-projecteur conforme à un premier mode de réalisation de l'invention.

Les figures 2A et 2B sont des vues schématiques d'un lave-projecteur conforme à un second mode de réalisation de l'invention.

La figure 3 est une vue schématique en coupe partielle d'un lave-projecteur conforme à une première variante de réalisation de l'invention.

Les figures 4A et 4B sont des vues de détail de deux autres variantes de réalisation.

La figure 5 est une vue schématique en coupe partielle d'un lave-projecteur conforme à une seconde variante de réalisation de l'invention.

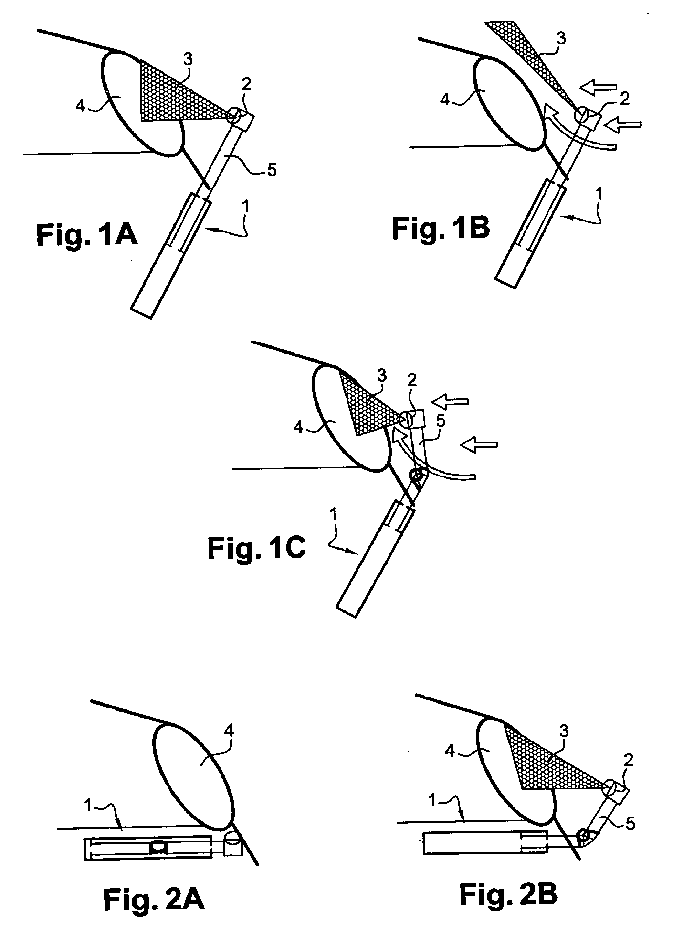

Sur les figures 1 et 2, est représenté un lave-projecteur 1 dont la constitution sera précisée plus loin. Ce lave-projecteur 1 est monté sur une partie de la structure du véhicule automobile non représentée. Il comporte un gicleur 2 porté par un porte-gicleur 5 et par lequel un jet 3 de liquide de lavage est envoyé sur une glace d'un projecteur 4.

Sur les figures 1A et 1B, le lave-projecteur 1 est supposé rigide, comme c'est le cas dans l'art antérieur. Aux vitesses basses ou moyennes, il se comporte comme représenté sur la figure 1A, le gicleur se trouvant orienté pour que tout le jet 3 vienne laver l'essentiel de la glace.

Aux vitesses élevées, il se crée des flux d'air schématisés sur la figure 1B par des flèches. Ces flux d'air originalement essentiellement horizontaux entraînent au contact avec la carrosserie du véhicule un flux tangentiel dirigé vers le haut. Ce flux tangentiel exerce une pression sur le jet 3 et le dévie vers le haut et ce dernier peut même être totalement dévié de la glace du projecteur comme représenté sur cette figure 1B.

Selon l'invention, le lave-projecteur 1 peut à ces vitesses élevées être déplacé par pivotement de façon contrôlée, comme représenté sur la figure 1C. Ce déplacement est contrôlé à une valeur assurant une position de repos du porte-gicleur 5 déployé en cas de vitesse du véhicule inférieure à une valeur seuil, où le lave-projecteur 1 est rectiligne, et le pivotement du porte-gicleur 5 vers une position pivotée en cas de vitesse du véhicule supérieure à cette valeur seuil.

Par ailleurs, dans l'exemple représenté sur la figure 1A, le lave-projecteur 1 est monté sur une partie de structure de façon inclinée relativement proche de la verticale. Il en résulte un encombrement relativement important au sein du véhicule.

L'invention permet également de résoudre ce problème, comme illustré sur les figures 2A et 2B. Le lave-projecteur 1 conforme à l'invention peut être monté sensiblement horizontalement sur la partie de structure, ce qui entraîne un minimum de contrainte sur le plan de l'encombrement. Dans ce cas, comme visible sur la figure 2B, son déplacement est contrôlé à une valeur assurant le pivotement du porte-gicleur vers sa position pivotée en position déployée. Le lave-projecteur vient alors en position de fonctionnement directement dans sa position pivotée qui permet à partir de la position horizontale de venir en position de gicleur face à la glace où son jet de liquide de lavage balaie celle-ci.

Le déplacement contrôlé du lave-projecteur peut être réalisé de diverses façons. Il peut être obtenu par motorisation commandée en fonction de la vitesse du véhicule ou au déploiement du lave-projecteur. Il peut également être obtenu par flexibilité ou articulation de la partie déployée du lave-projecteur. Dans ce cas, la flexibilité ou l'articulation est étudiée ou calculée pour entraîner le pivotement lors des vitesses élevées suite aux pressions exercées sur le lave-projecteur ou directement à la mise en fonctionnement du lave-projecteur.

Une fois, la plage de déplacement déterminée, c'est essentiellement le déclenchement du pivotement qui est contrôlé afin de permettre les fonctions déjà décrites, fonction de pivotement en cas de vitesses élevées ou fonction de pivotement dès l'expansion du lave-projecteur.

Des variantes de réalisation préférées du lave-projecteur 1 vont maintenant être décrites en référence aux figures suivantes. Les éléments communs aux différents modes de réalisation et aux différentes figures seront identiques.

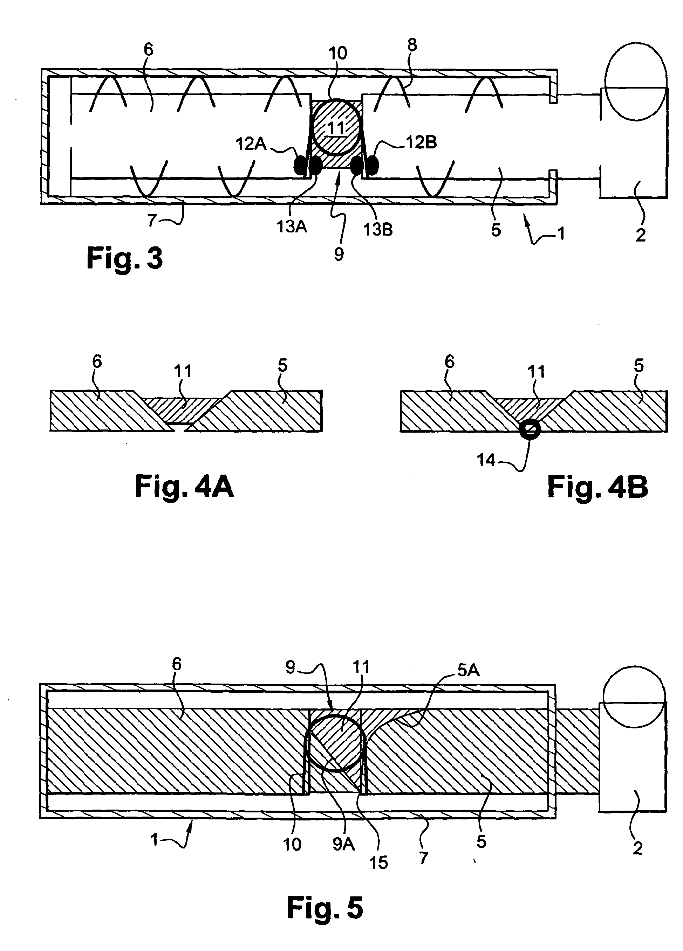

Un premier mode de réalisation est décrit sur la figure 3.

Un tel lave-projecteur 1 télescopique comporte de façon connue un porte-gicleur 5 associé à des moyens d'alimentation en liquide de lavage et relié à la tige 6 d'un piston monté coulissant à l'intérieur d'un cylindre 7 fixé à une partie de la structure d'un véhicule. La course du piston vers la position déployée est obtenue par la poussée du liquide de lavage entraînant la translation du porte-gicleur 5. Ce dernier revient à sa position de repos, telle que représentée sur cette figure, sous l'action d'un ressort de rappel schématisé 8, lorsque la pression de liquide est relâchée.

Le porte-gicleur non déployé 5 est aligné avec la tige 6 dans cette position de repos. Il est relié à la tige du piston de manière articulée autour d'un axe sensiblement horizontal par l'intermédiaire d'une liaison 9 dite de pivotement d'une position de repos à une position déployée pivotée et cette liaison de pivotement 9 est sollicitée par un agencement flexible taré 10, constituée d'un ressort. L'extrémité de la tige 6 et celle du porte-gicleur 5 sont connectées par un soufflet ou manchon souple 11 cylindrique monté de façon étanche afin d'assurer le passage du liquide de lavage entre ces deux éléments, tout en permettant une flexibilité de la liaison 9.

Le ressort 10 est de préférence un ressort hélicoïdal de flexion. Ses extrémités actives sont bloquées par deux paires de butées. Une première paire de butées 12A et 12B, l'une solidaire de la tige 6 et l'autre solidaire du porte-gicleur 5, est destinée à bloquer les extrémités du ressort 10 quand ce dernier est un ressort de traction comme représenté sur la figure 3. Une seconde paire de butées 13A et 13B, l'une solidaire de la tige 6 et l'autre solidaire du porte-gicleur 5, est destinée à bloquer les extrémités du ressort 10 quand ce dernier est un ressort de compression.

Selon le mode de réalisation représenté sur la figure 3, lors du déploiement du porte-gicleur 5 et de la tige 6, le ressort 10 sollicite les deux butées 12A et 12B et entraîne un pivotement immédiat, comme dans l'utilisation déjà décrite précédemment en référence aux figures 2A et 2B.

Lorsque est utilisé un ressort de compression taré, en position de repos, ces extrémités sont en pression contre les butées 13A et 13B et retiennent la tige 6 et le porte-gicleur 5 aligné, soit en position de repos, même après déploiement du lave-projecteur. Ce n'est qu'à une vitesse supérieure à une valeur seuil que la pression du flux d'air devient supérieure au ressort taré et pousse le porte-gicleur 5 en pivotement, comme dans l'utilisation déjà décrite précédemment en référence à la figure 1C.

Les figures 4A et 4B, représentent deux variantes de ce premier mode de réalisation.

Les extrémités de la tige 6 et du porte-gicleur 5 reliées par le manchon 11 y sont biseautées afin de renforcer l'orientation de pivotement induite par le ressort 10. Ce biseautage assure une sécurité contre un pivotement dans une direction différente.

Avantageusement, ce biseautage est complété par une charnière 14 qui assure un agencement plus robuste.

Un second mode de réalisation perfectionné, est représenté sur la figure 5.

La liaison de pivotement 9 comportant un manchon 11 et un ressort 10 est ici conformée pour assurer de façon plus fiable l'orientation du pivotement. Pour ce faire, les extrémités de la tige 6 et du porte-gicleur 5 sont profilées afin d'assurer un guidage du pivotement, orienté vers le haut vu selon la figure 5 comme dans les figures précédentes 3 et 4. Ici, l'extrémité de la tige 6 présente une surface plane 9A inclinée sur laquelle vient s'appuyer et rouler lors du pivotement une surface arrondie 5A agencée à l'extrémité du porte-gicleur 5. Cet agencement peut être complété d'une charnière disposée au point de contact 15 entre les deux pièces 5, 6 en position de repos.

L'invention englobe tout moyen équivalent pour réaliser le pivotement du lave-glace. Comme il a déjà été mentionné, il peut être obtenu par motorisation commandée. Il peut également être obtenu par flexibilité ou articulation de la partie déployée du lave-projecteur.

Dans le cadre des modes de réalisation préférés plus spécifiquement décrits ci-dessus, l'actionnement par ressort 10 peut être remplacé par une armature métallique incluse dans le manchon 11 et présentant la précontrainte souhaitée. Le manchon 11 et le ressort 10 peuvent également former une même pièce et être constitués d'un même matériau.

## Revendications

1. Lave-projecteur (1) télescopique pour véhicule automobile comportant un porte-gicleur (5) associé à des moyens d'alimentation en liquide de lavage et relié à la tige (6) d'un piston monté coulissant à l'intérieur d'un cylindre (7) solidarisable à une partie de la structure d'un véhicule, le lave-projecteur pouvant être déplacé, notamment de façon contrôlée, d'une position de repos à une position déployée pivotée, le porte-gicleur (5) étant aligné avec ladite tige (6) dans sa position de repos, **caractérisé en ce que** le porte-gicleur (5) reste aligné avec ladite tige quand le lave-projecteur (1) est mis en fonctionnement en position déployée en cas de vitesse du véhicule jusqu'à une valeur seuil, et **en ce que** le porte-gicleur (5) est déplacé vers sa position pivotée par rapport à la tige (6) en cas de vitesse du véhicule supérieure à cette valeur-seuil.

2. Lave-projecteur selon la revendication 1, **caractérisé en ce que** ledit déplacement assure le pivotement du porte-gicleur (5) vers sa position pivotée en position déployée.

3. Lave-projecteur selon la revendication 1 ou 2, dont le porte-gicleur est relié à la tige (6) du piston de manière articulée autour d'un axe transversal par l'intermédiaire d'une liaison (9) dite de pivotement d'une position de repos à une position déployée pivotée, **caractérisé en ce que** ladite liaison de pivotement (9) est à déclenchement contrôlé.

4. Lave-projecteur selon la revendication 3, **caractérisé en ce que** ladite liaison de pivotement (9) est sollicitée par un agencement flexible taré.

5. Lave-projecteur selon la revendication 4, **caractérisé en ce que** ledit agencement flexible comporte au moins un ressort (10) de compression.

6. Lave-projecteur selon la revendication 4, **caractérisé en ce que** ledit agencement flexible comporte au moins un ressort (10) de traction.

7. Lave-projecteur selon l'une des revendications précédentes, **caractérisé en ce que** ladite tige (6) et ledit porte-gicleur (5) sont reliés par un manchon (11) cylindrique étanche.

8. Lave-projecteur selon les revendications 4 et 7, **caractérisé en ce que** ledit manchon (11) et ledit agencement flexible sont constitués d'une même pièce.

9. Lave-projecteur selon l'une des revendications précédentes, **caractérisé en ce que** ladite tige (6) et ledit porte-gicleur (5) sont reliés par une charnière.

10. Agencement de lavage de projecteur comprenant un lave-projecteur selon la revendication 1 et une partie de la structure d'un véhicule, où ledit lave-projecteur est solidarisé à ladite partie de la structure d'un véhicule, **caractérisé en ce que** ledit cylindre (7) est monté incliné sur ladite partie de structure.

11. Agencement de lavage de projecteur comprenant un lave-projecteur selon l'une des revendications 1 ou 2 et une partie de la structure d'un véhicule, où ledit lave-projecteur est solidarisé à une partie de la structure d'un véhicule, **caractérisé en ce que** ledit cylindre (7) est monté sensiblement horizontalement sur ladite partie de structure.

## Claims

1. Telescopic headlight washer (1) for a motor vehicle, comprising a spray-nozzle holder (5) associated with means of supplying washing liquid and connected to the rod (6) of a piston mounted so as to slide inside a cylinder (7) that can be fixed to part of the structure of a vehicle, the headlight washer being able to moved, in particular in a controlled fashion, from an idle position to a pivoted deployed position, the spray-nozzle holder (5) being aligned with the said rod (6) in its idle position, **characterised in that** the spray-nozzle holder (5) remains aligned with the said rod when the headlight washer (1) is brought into operation in the deployed position in the case of a speed of the vehicle up to a threshold value, and **in that** the spray-nozzle holder (5) is moved towards its pivoted position with respect to the rod (6) in the case of a speed of the vehicle above this threshold value.

2. Headlight washer according to claim 1, **characterised in that** the said movement provides the pivoting of the spray-nozzle holder (5) towards its position pivoted in the deployed position.

3. Headlight washer according to claim 1 or 2, the spray-nozzle holder (5) of which is connected to the rod (6) of the piston so as to be articulated about a transverse axis by means of a so-called connection (9) for pivoting from an idle position to a pivoted deployed position, **characterised in that** the said pivoting connection (9) is of the controlled triggering type.

4. Headlight washer according to claim 3, **characterised in that** the said pivoting connection (9) is acted on by a calibrated flexible arrangement.

5. Headlight washer according to claim 4, **characterised in that** the said flexible arrangement comprises at least one compression spring (10).

6. Headlight washer according to claim 4, **characterised in that** the said flexible arrangement comprises at least one draw spring (10).

7. Headlight washer according to one of the preceding claims, **characterised in that** the said rod (6) and the said spray-nozzle holder (5) are connected by a watertight cylindrical sleeve (11).

8. Headlight washer according to claims 4 and 7, **characterised in that** the said sleeve (11) and the said flexible arrangement consist of one and the same piece.

9. Headlight washer according to one of the preceding claims, **characterised in that** the said rod (6) and the said spray-nozzle holder (5) are connected by a hinge.

10. Headlight washing arrangement comprising a headlight washer according to claim 1 and a part of the structure of a vehicle, where the said headlight washer is fixed to the said part of the structure of a vehicle, **characterised in that** the said cylinder (7) is mounted inclined on the said structure part.

11. Headlight washing arrangement comprising a headlight washer according to one of claims 1 or 2 and a part of the structure of a vehicle, where the said headlight washer is fixed to a part of the structure of a vehicle, **characterised in that** the said cylinder (7) is mounted substantially horizontally on the said structure part.

## Patentansprüche

1. Teleskop-Scheinwerferreinigungsanlage (1) für Kraftfahrzeuge mit einem Spritzdüsenhalter (5), der Mitteln zum Zuführen von Reinigungsflüssigkeit zugeordnet und mit der Stange (6) eines Kolben verbunden ist, der innen in einem mit einem Teil des Fahrzeugaufbaus fest verbindbaren Zylinder (7) gleitend gelagert ist, wobei die Scheinwerferreinigungsanlage insbesondere gesteuert aus einer Ruhestellung in eine ausgefahrene geschwenkte Stellung verschoben werden kann, wobei der Spritzdüsenhalter (5) in seiner Ruhestellung mit der Stange (6) fluchtend angeordnet ist, **dadurch gekennzeichnet, dass** der Spritzdüsenhalter (5) mit der Stange fluchtend angeordnet bleibt, wenn die Scheinwerferreinigungsanlage (1) bei einer Fahrzeuggeschwindigkeit bis zu einem Grenzwert in ausgefahrener Stellung in Betrieb gesetzt wird, und dass der Spritzdüsenhalter (5) bei einer diesen Grenzwert überschreitenden Fahrzeuggeschwindigkeit in seine bezüglich der Stange (5) geschwenkte Stellung verschoben wird.

2. Scheinwerferreinigungsanlage nach Anspruch 1,
**dadurch gekennzeichnet, dass** in ausgefahrener Stellung die genannte Verschiebung das Schwenken des Spritzdüsenhalters (5) in seine geschwenkte Stellung sicherstellt.

3. Scheinwerferreinigungsanlage nach Anspruch 1 oder 2, bei welcher der Spritzdüsenhalter mit der Stange (6) des Kolbens um eine Querachse herum schwenkbar durch eine Verbindung (9) zum Schwenken aus einer Ruhestellung in eine ausgefahrene geschwenkte Stellung verbunden ist, **dadurch gekennzeichnet, dass** die Schwenkverbindung (9) gesteuert auslösbar ist.

4. Scheinwerferreinigungsanlage nach Anspruch 3,
**dadurch gekennzeichnet, dass** die Schwenkverbindung (9) durch eine vorgespannte elastische Einrichtung beaufschlagt ist.

5. Scheinwerferreinigungsanlage nach Anspruch 4,
**dadurch gekennzeichnet, dass** die elastische Einrichtung wenigstens eine Druckfeder (10) aufweist.

6. Scheinwerferreinigungsanlage nach Anspruch 4,
**dadurch gekennzeichnet, dass** die elastische Einrichtung wenigstens eine Zugfeder (10) aufweist.

7. Scheinwerferreinigungsanlage nach einem der vorhergehenden Ansprüche, **dadurch gekennzeichnet, dass** die Stange (6) und der Spritzdüsenhalter (5) durch eine dichte zylindrische Muffe (11) miteinander verbunden sind.

8. Scheinwerferreinigungsanlage nach den Ansprüchen 4 und 7,
**dadurch gekennzeichnet, dass** die Muffe (11) und die elastische Einrichtung aus einem Stück gebildet sind.

9. Scheinwerferreinigungsanlage nach einem der vorhergehenden Ansprüche, **dadurch gekennzeichnet, dass** die Stange (6) und der Spritzdüsenhalter (5) durch ein Scharnier miteinander verbunden sind.

10. Einrichtung zur Reinigung eines Scheinwerfers mit einer Scheinwerferreinigungsanlage nach Anspruch 1 und einem Teil des Fahrzeugaufbaus, wobei die Scheinwerferreinigungsanlage an diesem Teil des Fahrzeugaufbaus befestigt ist, **dadurch gekennzeichnet, dass** der Zylinder (7) auf dem Aufbauteil schräg montiert ist.

11. Einrichtung zur Reinigung eines Scheinwerfers mit einer Scheinwerferreinigungsanlage nach einem der Ansprüche 1 oder 2 und einem Teil des Fahrzeugaufbaus, wobei die Scheinwerferreinigungsanlage an einem Teil des Fahrzeugaufbaus befestigt ist,
**dadurch gekennzeichnet, dass** der Zylinder (7) auf dem Aufbauteil im Wesentlichen waagerecht montiert ist.
